# EUROPEAN PATENT APPLICATION

(11) **EP 4 614 763 A1**
(43) Date of publication of application: **10.09.2025**
(21) Application number: 24808838.7
(22) Date of filing: 22.02.2024
(51) Int. Cl.: H02J 50/10, H02J 50/80, H02J 9/04

(54) **POWER RECEIVING END, AND WIRELESS POWER SUPPLY SYSTEM AND CONTROL METHOD THEREFOR**

(30) Priority: 10.01.2024 CN 202410033135
(71) Applicant: Chengdu Convenientpower Semiconductor Co., Ltd., Chengdu, Sichuan 610000 (CN)
(72) Inventor: GUO, Zufeng, Chengdu Sichuan 610000 (CN); DENG, Jian, Chengdu Sichuan 610000 (CN); LIU, Xun, Chengdu Sichuan 610000 (CN)
(74) Representative: Cicconetti, Andrea
(86) International application number: PCT/CN2024/078007
(87) International publication number: WO 2025/148131

(57) **Abstract**

The present disclosure provides a power-receiving end, a wireless power supply system, and a control method thereof. The power-receiving end is configured to be mutually coupled with the power transmitting end in the wireless power supply system. The power-receiving end comprises a receiving circuit and a receiving controller, wherein the receiving controller comprises a first unit and a second unit. The first unit is connected to the receiving circuit. The receiving circuit is configured to supply power to the first unit when the wireless power supply system is in a power supply state, wherein the power supply state is of the transmission of electrical energy from the power transmitting end to the power-receiving end. The second unit is configured to be connected to an additional power source, and the additional power source is configured to provide power to the second unit. The solution of the present disclosure ensures that even when the wireless power supply system is in a paused power supply state, the additional power source can still support the continued operation of the second unit by separately supplying power to the first unit and the second unit. This prevents the sudden cessation of operation of the receiving controller during a power outage, which will affect the stability of the back end.

## Description

### Cross-reference to Related Applications

The present disclosure claims the priority to the Chinese patent application with the filling No. 202410033135.1 filed with the Chinese Patent Office on January 10, 2024, and entitled "Power-Receiving End, Wireless Power Supply System and Control Method Thereof", the contents of which are incorporated herein by reference in entirety.

### Technical Field

The present disclosure relates to the technical field of wireless charging systems, in particular to a power-receiving end, a wireless power supply system, and a control method thereof.

### Background Art

Traditional electrical energy transmission is mainly done through wires. Due to its inherent shortcomings, wired charging has limitations in special environments such as dampness, flammability, and medical implants, and it also brings many inconveniences in daily life.

Wireless charging technology avoids the drawbacks of traditional wired charging methods and is gaining more attention. It has increasingly widespread applications in various fields such as consumer electronics, industrial products, and medical services. At present, wireless charging devices are ubiquitous, with the increasing popularity of wireless charging devices such as smartphones, wireless headphones, wearable digital products, and so on.

Wireless power supply systems can be configured to charge wireless charging devices, and the stability of their operation directly affects the efficiency and user experience of wireless charging.

### Summary

The objective of the present disclosure is to provide a power-receiving end, a wireless power supply system and a control method thereof to at least partially address the above-mentioned issues.

In order to achieve the objective above, the embodiments of the present disclosure apply the following technical solution.

In the first aspect, in the embodiments of the present disclosure, a power-receiving end is provided. The power-receiving end is configured to be mutually coupled with the power transmitting end in the wireless power supply system. The power-receiving end comprises a receiving circuit and a receiving controller, wherein the receiving controller comprises a first unit and a second unit.

The first unit is connected to the receiving circuit.

The receiving circuit is configured to supply power to the first unit when the wireless power supply system is in a power supply state,

wherein the power supply state is of the transmission of electrical energy from the power transmitting end to the power-receiving end.

The second unit is configured to be connected to an additional power source, and the additional power source is configured to provide power to the second unit.

Optionally, the first unit is configured to send a pause power supply command to the power transmitting end and to send operational status information and configuration information to the second unit before the power transmitting end pauses the power supply.

The second unit is configured to transmit back the operational status information and configuration information to the first unit when the power transmitting end resumes the power supply.

The first unit is configured to operate based on the operational status information and configuration information after receiving the operational state information and configuration information back.

Optionally, the configuration information comprises a set timing duration of the pause in the power supply, and the second unit comprises a timing circuit.

The timing circuit is configured to record the duration of the pause in the power supply by the power transmitting end.

Optionally, the second unit is further configured to send an alarm message to a host computer when the duration of the pause in power supply by the power transmitting end exceeds the set timing duration.

The host computer is configured to send a reset signal to the second unit when receiving the alarm message, thus triggering the second unit to perform a reset operation.

Optionally, the configuration information comprises a set timing duration of the pause in the power supply, and the second unit comprises a timing circuit.

The timing circuit is configured to record the duration of the pause in the power supply by the power transmitting end.

Optionally, the second unit is further configured to perform a reset operation when the duration of the pause in the power supply by the power transmitting end exceeds the set timing duration.

Optionally, the first unit is configured to send a pause power supply command to the power transmitting end.

The power transmitting end is configured to send an acknowledgment packet to the first unit when receiving the pause power supply command, and to maintain the power supply until a preset time duration and then pause the power supply.

The first unit is configured to decode the acknowledgment packet when receiving it.

Optionally, the communication method between the first unit and the power transmitting end can be any one or more of load modulation communication, amplitude modulation communication, frequency modulation communication, and phase modulation communication.

Optionally, the receiving circuit comprises sequentially cascaded receiving coils, a second matcher, and a rectifier.

The receiving coils are configured to be mutually coupled with the transmitting coils in the power transmitting end. The rectifier is configured to be connected to a back-end load module.

Optionally, the first unit is connected to an output end of the rectifier, and the rectifier is configured to convert the alternating current output from the second matcher into direct current and transmit it backward.

Optionally, a backend of the rectifier is provided with a regulator. The regulator is configured to be connected to the load module, and the regulator is connected to the first unit and receives control from the first unit.

In the second aspect, in the embodiments of the present disclosure, a wireless power supply system is provided. The wireless power supply system comprises a power transmitting end and the aforementioned power-receiving end, wherein the power transmitting end and the power-receiving end are mutually coupled.

Optionally, the power transmitting end comprises a transmitting controller, a first matcher, an inverter, and transmitting coils.

The inverter, the first matcher, and the transmitting coils are sequentially cascaded. The inverter is configured to be connected to an external power source, and the transmitting coils are configured to be mutually coupled with the receiving coils in the power-receiving end.

The transmitting controller is connected to the first matcher and/or the inverter, and the transmitting controller is configured to send control commands to the first matcher and/or the inverter.

In the third aspect, in the embodiments of the present disclosure, a control method for a wireless power supply system is provided, which should be configured as the aforementioned wireless power supply system. The method comprises:
the first unit sending a pause power supply command to the power transmitting end;
the first unit sending operational status information and configuration information to the second unit before the power transmitting end pauses the power supply;
the second unit transmitting back the operational status information and configuration information to the first unit when the power transmitting end resumes power supply; and
the first unit operating based on the operational status information and configuration information after receiving the operational state information and configuration information back.

Optionally, the configuration information comprises a set timing duration of the pause in the power supply, and the second unit comprises a timing circuit. The timing circuit is configured to record the duration of the pause in the power supply by the power transmitting end. The method further comprises:
the second unit sending an alarm message to a host computer when the duration of the pause in power supply by the power transmitting end exceeds the set timing duration; and
the host computer sending a reset signal to the second unit when receiving the alarm message, thus triggering the second unit to perform a reset operation.

Optionally, after the first unit sending a pause power supply command to the power transmitting end, the method further comprises:
the power transmitting end sending an acknowledgment packet to the first unit when receiving the pause power supply command, maintaining the power supply until a preset time duration and then pausing the power supply; and the first unit decoding the acknowledgment packet when receiving it.

Relative to the prior art, in the embodiments of the present disclosure, a power-receiving end, a wireless power supply system, and a control method thereof are provided. The power-receiving end is configured to be mutually coupled with the power transmitting end in the wireless power supply system. The power-receiving end comprises a receiving circuit and a receiving controller, wherein the receiving controller comprises a first unit and a second unit. The first unit is connected to the receiving circuit. The receiving circuit is configured to supply power to the first unit when the wireless power supply system is in a power supply state, wherein the power supply state is of the transmission of electrical energy from the power transmitting end to the power-receiving end. The second unit is configured to be connected to an additional power source, and the additional power source is configured to provide power to the second unit. The solution of the present disclosure ensures that even when the wireless power supply system is in a paused power supply state, the additional power source can still support the continued operation of the second unit by separately supplying power to the first unit and the second unit. This prevents the sudden cessation of operation of the receiving controller during a power outage, which will affect the stability of the back end.

To make the above objectives, features, and advantages of the present disclosure more evident and comprehensible, the following preferred embodiments are described in detail with the drawings.

### Brief Description of Drawings

In order to more clearly illustrate the technical solutions of the embodiments of the present disclosure, the following will briefly introduce the drawings used in the embodiments. It should be understood that the following drawings only show some embodiments of the present disclosure, and therefore it should not be regarded as a limitation on the scope. Those ordinary skilled in the art can also obtain other related drawings based on these drawings without inventive effort.
FIG. 1 is a block diagram of a wireless power supply system provided by embodiments of the present disclosure;
FIG. 2 is a schematic diagram of a signaling process provided by embodiments of the present disclosure;
FIG. 3 is one of flow charts of the wireless power supply system control method provided by embodiments of the present disclosure;
FIG. 4 is one of flow charts of the wireless power supply system control method provided by embodiments of the present disclosure; and
FIG. 5 is another one of flow charts of the wireless power supply system control method provided by embodiments of the present disclosure.

Reference numerals 10- power-receiving end; 20- power transmitting end; 110-receiving controller; 111- first unit; 112- second unit; 120- second matcher; 130-rectifier; 140- receiving coil; 210- transmitting controller; 220- first matcher; 230-inverter; 240- transmitting coil; 30- additional power source.

### Detailed Description of Embodiments

In order to provide a clearer and more complete understanding of the objective, technical solutions, and advantages of the embodiment of the present disclosure, the following description will be combined with the accompanying drawings. It is evident that the described embodiments are a part of the embodiments of the present disclosure, rather than all embodiments. The components of the embodiments of the present disclosure generally described and illustrated in the drawings herein can be arranged and designed in a variety of different configurations.

Accordingly, the following detailed description of the embodiments of the present disclosure provided in the drawings is not intended to limit the scope of the present disclosure for which protection is claimed but merely represents selected embodiments of the present disclosure. Based on the embodiments of the present disclosure, all other embodiments obtained by those skilled in the art without inventive effort shall fall within the scope of protection of the present disclosure.

It should be noted that similar numerals and letters denote similar terms in the following drawings so that once an item is defined in one drawing, it does not need to be further discussed in subsequent drawings. At the same time, in the description of the present disclosure, the terms "first", "second" and the like are only used for distinguishing descriptions, and cannot be understood as indicating or implying relative importance.

It is important to note that, in the context, relationship terms such as first and second are used only to distinguish one entity or operation from another entity or operation, without necessarily requiring or implying any such actual relationship or order between those entities or operations. Furthermore, the terms "comprise", "include", or any other variations are intended to encompass non-exclusive inclusion. This means that processes, methods, items, or devices that include a series of elements not only contain those elements explicitly listed but also contain other elements that are not explicitly mentioned or inherently part of such processes, methods, items, or devices. In the absence of further limitations, the inclusion of an element specified by the phrase "comprising a..." does not exclude the presence of additional identical elements in the process, method, article, or apparatus that includes the specified element.

In the description of the present disclosure, it should be noted that the terms "up", "down", "in", "out", etc. indicate an orientation or positional relationship based on the orientation or positional relationship shown in the drawings, or the usual orientation or positional relationship of the disclosed product when used, which are intended only to facilitate and simplify the description of the present disclosure, not to indicate or imply that the device or element referred to must have a particular orientation, be constructed and operate in a particular orientation, and therefore are not to be construed as limiting the present disclosure.

In the description of the present disclosure, it should also be noted that unless otherwise clearly stipulated and limited, the terms "provide" and "connect" should be understood in a broad sense, for example, it can be a fixed connection, a detachable connection, or an integral connection; it can be a mechanical connection or an electrical connection; and it can be a direct connection, an indirect connection through an intermediary, or an internal communication between two components. Those of ordinary skill in the art can understand the meanings of the above terms in the present disclosure according to specific situations.

Some embodiments of the present disclosure are described in detail below, in conjunction with the drawings. The embodiments and features described herein can be combined with each other in a non-conflicting manner.

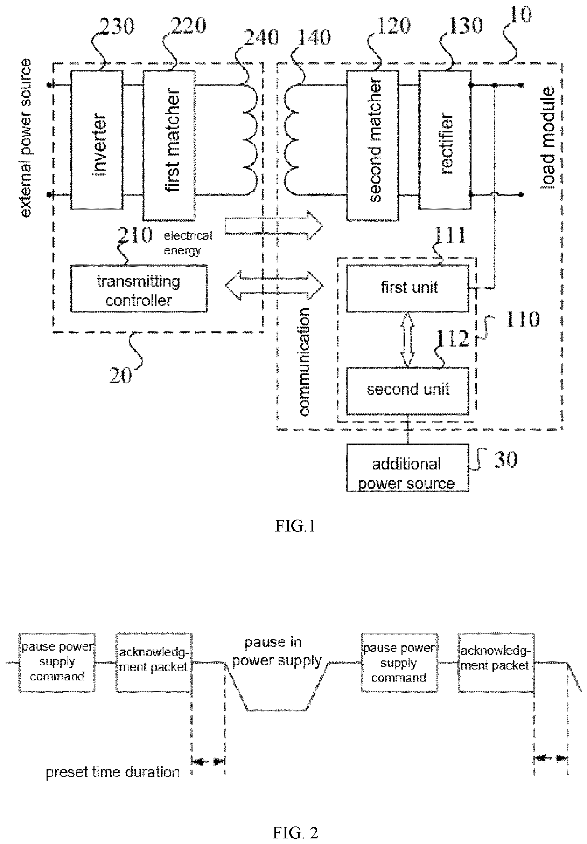

Referring to FIG. 1, FIG. 1 is a block diagram of a wireless power supply system provided by embodiments of the present disclosure. As shown in FIG. 1, the wireless power supply system comprises a power transmitting end 20 and a power-receiving end 10, wherein the power transmitting end 20 and the power-receiving end 10 are mutually coupled.

Optionally, the power transmitting end 20 can comprise a transmitting controller 210, a first matcher 220, an inverter 230, and transmitting coils 240. The transmitting controller 210 is connected to the first matcher 220 and/or the inverter 230, which is not shown in the drawing. The transmitting controller 210 can send control commands to the first matcher 220 and/or the inverter 230 for corresponding control purposes.

The inverter 230, the first matcher 220, and the transmitting coils 240 are sequentially cascaded. The inverter 230 is configured to be connected to an external power source, and the transmitting coils 240 are configured to be mutually coupled with the receiving coils 140 in the power-receiving end 10. The transmitting coils 240 and the receiving coils 140 can achieve electrical energy transmission through coupling.

The power-receiving end 10 comprises a receiving circuit and a receiving controller 110, and the receiving circuit can comprise sequentially cascaded receiving coils 140, a second matcher 120, and a rectifier 130. The receiving coils 140 are configured to be mutually coupled with the transmitting coils 240 in the power transmitting end 20. The rectifier 130 is configured to be connected to a back-end load module. The load module can include, but is not limited to, batteries in mobile phones, tablets, smartwatches, and similar devices. When the wireless charging system is in the power supply state and the power transmitting end 20 is transmitting electrical energy to the power-receiving end 10, the rectifier 130 can provide power to the load module, thereby completing the charging or powering of the load module.

Optionally, the receiving controller 110 comprises a first unit 111 and a second unit 112.

The first unit 111 can be the main power supply unit in the receiving controller 110, which includes but is not limited to communication sub-circuits. The second unit 112 can be the low-power unit in the receiving controller 110. The second unit 112 is configured to be connected to an additional power source 30, and the additional power source 30 is configured to provide power to the second unit 112. The additional power source 30 can be provided by the battery in a device (such as a mobile phone), or it can be provided by the host computer (e.g., CPU) in the device through GPIO (General-purpose input/output) pins. The voltage range of the additional power source 30 includes the battery voltage (3.5V~4.5V) or low-voltage GPIO (3.3V/1.8V/1.5V/1.2V, etc.).

Optionally, the second unit 112 can include the following: a timing circuit and its controller, data storage space, communication and reset sub-circuits for interacting with the host computer. The first unit 111 can include control modules other than the second unit 112, such as the main controller, main storage space, GPIO, Analog-to-Digital Converter (ADC), Amplitude Shift Keying (ASK for short) communication sub-circuit, Frequency Shift Keying (FSK for short) communication sub-circuit, and protection sub-circuit. Optionally, the second unit 112 consumes <100µA of current from the additional power source 30.

Optionally, the second unit 112 consumes 30µA of current from the additional power source 30, allowing for a preset range of deviation.

The first unit 111 is connected to the receiving circuit. Optionally, the first unit 111 is connected to the output end of the rectifier 130 in the receiving circuit, and the rectifier 130 is configured to convert the alternating current output from the second matcher 120 into direct current and transmit it backward. When the wireless charging system is in the power supply state, the receiving circuit (rectifier 130) is configured to supply power to the first unit 111, wherein the power supply state is of the transmission of electrical energy from the power transmitting end 20 to the power-receiving end 10.

Optionally, the first unit 111 is connected to the second matcher 120 or other components in the receiving circuit (not shown in the drawing). The first unit 111 can send control commands to the second matcher 120 or other components in the receiving circuit to achieve corresponding control purposes.

The receiving controller 110 in the power-receiving end 10 and the transmitting controller 210 in the power transmitting end 20 are configured to perform communication, protocol processing, power control during power transmission, protection, and other functions. Many of these functions require data communication between the transmitting controller 210 and the receiving controller 110.

Optionally, the transmitting controller 210 is communicatively connected to the first unit 111 in the receiving controller 110, and the communication between the first unit 111 and the transmitting controller 210 in the power transmitting end 20 can be any one or more of load modulation communication, amplitude modulation communication, frequency modulation communication, and phase modulation communication. In addition to the aforementioned in-band communication methods, the first unit 111 and the transmitting controller 210 can also communicate using methods such as mobile hotspot (WiFi for short), Near Field Communication (NFC for short), and Bluetooth.

It should be noted that both the receiving controller 110 and the transmitting controller 210 require power. In one optional embodiment of the present disclosure, the transmitting controller 210 can obtain power from the transmitting circuit formed by cascading the inverter 230, the first matcher 220, and the transmitting coils 240.

In the solution of the present disclosure, the receiving controller 110 is divided into two parts: the first unit 111 and the second unit 112. The first unit 111 is powered by the receiving circuit (rectifier 130), and the second unit 112 is powered by the additional power source 30. Compared to the situation in which the entire receiving controller 110 is supplied entirely by the receiving circuit (rectifier 130), and in which the receiving controller 110 will not be able to work when the coupling between the power-receiving end 10 and the power transmitting end 20 is unsuccessful, i.e., when the power transmitting end 20 does not transmit power to the power-receiving end 10, in the present disclosure solution, by supplying the power separately, the first unit 111 can cease operation when the power transmitting end 20 is not transferring electrical energy to the power-receiving end 10, and the second unit 112 continues to operate stably. The second unit 112 can store operational status information and configuration information of the power-receiving end 10. When the power transmitting end 20 resumes power supply, this enables the power-receiving end 10 to quickly return to a stable operational state.

Compared to the situation where the entire receiving controller 110 is entirely powered by the additional power supply 30, and the power consumption of the receiving controller 110 on the additional power supply 30 is high and can reach 10mA, which will affect the service life of the additional power source 30 (battery), the solution of the present disclosure, by supplying the power separately, can safeguard that the second unit 112 continues to work stably when the power transmitting end 20 is not transmitting the power to the power-receiving end 10, and reduce the power consumption of the additional power source 30 as much as possible.

The embodiments of the present disclosure provide a power-receiving end, the power-receiving end 10 as shown in FIG. 1 of the wireless power supply system. When the wireless power supply system is in a paused power supply state, the additional power source 30 can still support the continued operation of the second unit 112. This prevents the sudden cessation of operation of the receiving controller 110 during a power outage, which will affect the stability of the back end.

In one optional embodiment of the present disclosure, a backend of the rectifier 130 is provided with a regulator. The regulator is configured to be connected to the load module. The regulator is connected to the first unit 111 and receives control from the first unit 111.

In one optional embodiment of the present disclosure, the first unit 111 is communicatively connected to the second unit 112, which can allow for data exchange between them.

Optionally, the first unit 111 is configured to send a pause power supply command to the power transmitting end 20 and to send operational status information and configuration information to the second unit 112 before the power transmitting end 20 pauses the power supply.

Optionally, the operational status information of the power-receiving end 10 can include output voltage, output current, and output power. The configuration information of the power-receiving end 10 can include operating frequency, negotiated maximum power level, negotiated current power level, identifier of the power transmitting end 20 (e.g., ID of the power transmitting end 20), power contract negotiated between the power-receiving end 10 and the power transmitting end 20, parameters negotiated between the power-receiving end 10 and the power transmitting end 20, International Wireless Charging Standard (Qi) version, International Wireless Charging Standard (Qi) Power Profile, and the set timing duration of the pause in power supply.

It should be noted that pausing the power supply from the power transmitting end 20 can help reduce system temperature or enable partial functionality of the power-receiving end 10 when no electrical energy is being received. The first unit 111 can, under the control of the user or the host computer, send a pause power supply command to the power transmitting end 20.

The second unit 112 is configured to transmit back the operational status information and configuration information to the first unit 111 when the power transmitting end 20 resumes power supply.

The first unit 111 is configured to operate based on the operational status information and configuration information after receiving the operational state information and configuration information back so as to restore the power-receiving end 10 to the operating state before the power transmitting end 20 paused power supply.

In one optional embodiment of the present disclosure, the configuration information can comprise a set timing duration of the pause in the power supply, and the second unit 112 can comprise a timing circuit.

The timing circuit is configured to record the duration of the pause in the power supply by the power transmitting end 20.

Optionally, the timing circuit is connected to a flag of the first unit 111. After the power supply from the power transmitting end 20 is paused, the status of the flag of the first unit 111 changes, for example, from high level to low level. Thus, the timing circuit can monitor the initial time when the power transmitting end 20 pauses power supply. When detecting the pause in the power supply from the power transmitting end 20, the timing circuit starts counting, thereby obtaining the duration of the pause in the power supply from the power transmitting end 20.

The second unit 112 is further configured to send an alarm message to a host computer when the duration of the pause in power supply by the power transmitting end 20 exceeds the set timing duration.

Optionally, the host computer can be the CPU in a mobile device (such as a smartphone), and the mobile device is deployed in the power-receiving end 10 shown in FIG. 1 of the present disclosure. The host computer is communicatively connected to the second unit 112.

Optionally, by sending the alarm message to the host computer, the host computer is informed that the power transmitting end 20 has not resumed power supply within the preset timing duration, for example, during the pause in power supply, the power-receiving end 10 has been removed (or deleted) from the power transmitting end 20.

The host computer is configured to send a reset signal to the second unit 112 when receiving the alarm message, thus triggering the second unit 112 to perform a reset operation.

Optionally, the second unit 112 performs a reset operation, which can delete the stored operational status information and configuration information. When the power supply is restored again, the power-receiving end 10 will return to its initial state. It is important to emphasize that the restoration to the initial state here does not refer to the restoration to the operational state before the pause in power supply from the power transmitting end 20 mentioned earlier. The initial state can be the factory default state or a predefined default state.

Optionally, after performing the reset operation, when the power supply is restored, the receiving controller 110 (first unit 111) and the transmitting controller 210 will renegotiate.

In one optional embodiment of the present disclosure, when the host computer receives the alarm message, it changes the value of the corresponding input signal of the first unit 111 (such as the magnitude of GPIO) so as to force the first unit 111 to reset.

Optionally, after the reset, the additional power source 30 can stop supplying power to the second unit 112. When the next pause in the power supply is required, the first unit 111 can send a corresponding request to the host computer so as to prompt the host computer to control the additional power source 30 to supply power to the second unit 112.

In one optional embodiment of the present disclosure, the configuration information can comprise a set timing duration of the pause in the power supply, and the second unit 112 can comprise a timing circuit. The timing circuit is configured to record the duration of the pause in the power supply by the power transmitting end 20.

The second unit 112 is further configured to perform a reset operation when the duration of the pause in power supply by the power transmitting end 20 exceeds the set timing duration.

On the basis of the foregoing, the embodiments of the present disclosure also provide one optional embodiment on how to trigger the suspension of the power supply, refer to the following.

The first unit 111 is configured to send a pause power supply command to the power transmitting end 20.

The power transmitting end 20 is configured to send an acknowledgment packet to the first unit 111 when receiving the pause power supply command, and to maintain the power supply until a preset time duration and then pause the power supply.

The first unit 111 is configured to decode the acknowledgment packet when receiving it.

Optionally, the first unit 111 decodes the acknowledgment packet (ACK) to confirm that the power transmitting end 20 has successfully received the pause power supply command and is ready to enter the pause power supply state.

Referring to FIG. 2, FIG. 2 is a schematic diagram of a signaling process provided by embodiments of the present disclosure. The first unit 111 sends a pause power supply command to the power transmitting end 20. When receiving the pause power supply command, the power transmitting end 20 sends an acknowledgment packet to the first unit 111. After sending the acknowledgment packet, it continues to supply power for the preset time duration before pausing the power supply. This avoids the situation that the decoding time is not enough to successfully decode the acknowledgment packet.

Optionally, the preset time duration can be set to 5ms, with a minimum of 2ms, to ensure that every compatible power-receiving end 10 has sufficient time to complete decoding.

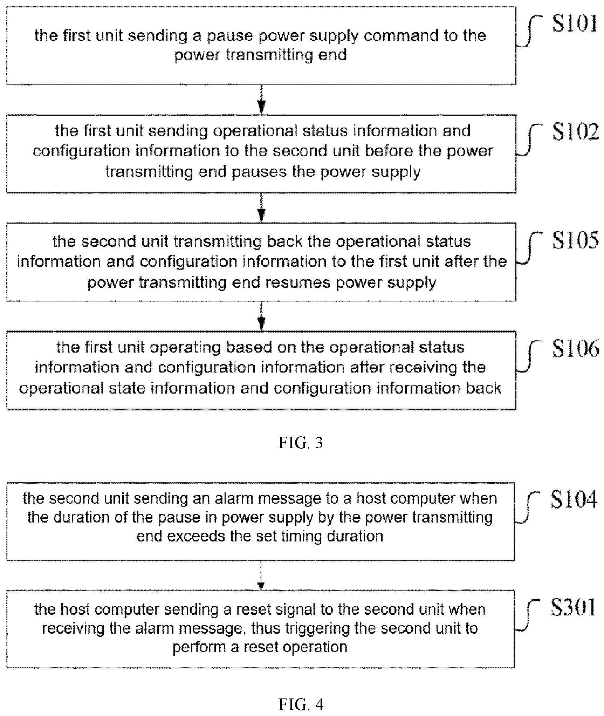

The embodiments of the present disclosure also provide a control method for a wireless power supply system, which can be but is not limited to being configured as the wireless power supply system shown in FIG. 1. Referring to FIG. 3, FIG. 3 is one of flow charts of the wireless power supply system control method provided by embodiments of the present disclosure. As shown in FIG. 3, the wireless power supply system control method for a wireless power supply system includes S101, S102, S105, and S106, as described below.
S101: the first unit sending a pause power supply command to the power transmitting end;
S102: the first unit sending operational status information and configuration information to the second unit before the power transmitting end pauses the power supply; S105: the second unit transmitting back the operational status information and configuration information to the first unit when the power transmitting end resumes power supply; and S106: the first unit operating based on the operational status information and configuration information after receiving the operational state information and configuration information back.

Optionally, the configuration information can comprise a set timing duration of the pause in the power supply, and the second unit 112 can comprise a timing circuit. The timing circuit is configured to record the duration of the pause in the power supply by the power transmitting end 20. On this basis, reference is made to FIG. 4. FIG. 4 is one of the flow charts of the wireless power supply system control method provided by embodiments of the present disclosure. As shown in FIG. 4, the wireless power supply system control method for a wireless power supply system further includes S104 and S301, as described below.
S104: the second unit sending an alarm message to a host computer when the duration of the pause in power supply by the power transmitting end exceeds the set timing duration; and
S301: the host computer sending a reset signal to the second unit when receiving the alarm message, thus triggering the second unit to perform a reset operation.

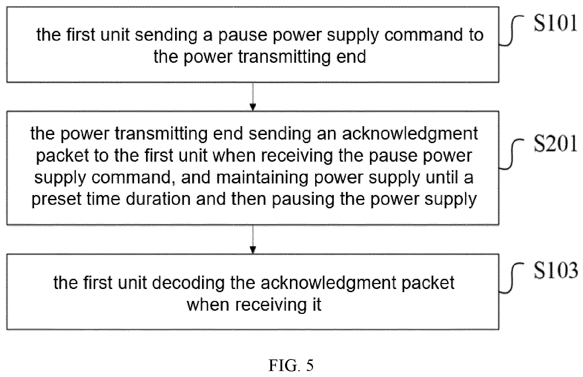

Referring to FIG. 5, FIG. 5 is one of flow charts of the wireless power supply system control method provided by embodiments of the present disclosure.

As shown in FIG. 5, in the S101, after the first unit sending a pause power supply command to the power transmitting end, the control method for a wireless power supply system further comprises S201 and S103, as described below.
S201: the power transmitting end sending an acknowledgment packet to the first unit when receiving the pause power supply command, maintaining the power supply until a preset time duration and then pausing the power supply; and
S103: the first unit decoding the acknowledgment packet when receiving it.

It should be noted that the control method for a wireless power supply system provided in the embodiment can perform the functions and purposes as illustrated in the wireless power supply system embodiments described above, thereby achieving the corresponding technical effects. To briefly summarize, the aspects not explicitly mentioned in the embodiment can be referenced from the corresponding content in the embodiments described above.

In summary, in the embodiments of the present disclosure, a power-receiving end, a wireless power supply system, and a control method thereof are provided. The power-receiving end is configured to be mutually coupled with the power transmitting end in the wireless power supply system. The power-receiving end comprises a receiving circuit and a receiving controller, wherein the receiving controller comprises a first unit and a second unit. The first unit is connected to the receiving circuit. The receiving circuit is configured to supply power to the first unit when the wireless power supply system is in a power supply state, wherein the power supply state is of the transmission of electrical energy from the power transmitting end to the power-receiving end. The second unit is configured to be connected to an additional power source, and the additional power source is configured to provide power to the second unit. The solution of the present disclosure ensures that even when the wireless power supply system is in a paused power supply state, the additional power source can still support the continued operation of the second unit by separately supplying power to the first unit and the second unit. This prevents the sudden cessation of operation of the receiving controller during a power outage, which will affect the stability of the back end.

The above is only a preferred embodiment of the present disclosure, which is not intended to limit, and the present disclosure may have various changes and variations for those skilled in the art. Any modification, equivalent substitution, improvement, etc. made within the spirit and principles of the present disclosure shall be included in the scope of protection of the present disclosure.

For those skilled in the art, it is evident that the present disclosure is not limited to the details of the exemplary embodiments described above. Furthermore, it can be implemented in various other specific forms without departing from the spirit or essential characteristics of the disclosure. Therefore, from any perspective, the embodiments should be considered exemplary and non-limiting. The scope of the present disclosure is defined by the appended claims rather than the foregoing description. It is therefore intended that all variations falling within the meaning and scope of the equivalent elements of the claims be encompassed within the present disclosure. Any drawing labels in the claims should not be construed as limiting the claims involved.

The pause power supply command is successfully received and the pause power supply state is ready to enter.

Referring to FIG. 2, FIG. 2 is a schematic diagram of a signaling process provided by embodiments of the present disclosure. The first unit 111 sends a pause power supply command to the power transmitting end 20. When receiving the pause power supply command, the power transmitting end 20 sends an acknowledgment packet to the first unit 111. After sending the acknowledgment packet, it continues to supply power for the preset time duration before pausing the power supply. This avoids the situation where the decoding time is not enough to successfully decode the acknowledgment packet.

Optionally, the preset time duration can be set to 5ms, with a minimum of 2ms, to ensure that every compatible power-receiving end 10 has sufficient time to complete decoding.

The embodiments of the present disclosure also provide a control method for a wireless power supply system, which can be but is not limited to being configured as the wireless power supply system shown in FIG. 1. Referring to FIG. 3, FIG. 3 is one of flow charts of the wireless power supply system control method provided by embodiments of the present disclosure. As shown in FIG. 3, the wireless power supply system control method for a wireless power supply system includes S101, S102, S105, and S106, as described below.
S101: the first unit sending a pause power supply command to the power transmitting end;
S102: the first unit sending operational status information and configuration information to the second unit before the power transmitting end pauses the power supply; S105: the second unit transmitting back the operational status information and configuration information to the first unit when the power transmitting end resumes power supply; and S106: the first unit operating based on the operational status information and configuration information after receiving the operational state information and configuration information back.

Optionally, the configuration information comprises a set timing duration of the pause in the power supply, and the second unit 112 comprises a timing circuit. The timing circuit is configured to record the duration of the pause in the power supply by the power transmitting end 20. On this basis, reference is made to FIG. 4. FIG. 4 is one of flow charts of the wireless power supply system control method provided by embodiments of the present disclosure. As shown in FIG. 4, the wireless power supply system control method for a wireless power supply system further includes S104 and S301, as described below.
S104: the second unit sending an alarm message to a host computer when the duration of the pause in power supply by the power transmitting end exceeds the set timing duration; and
S301: the host computer sending a reset signal to the second unit when receiving the alarm message, thus triggering the second unit to perform a reset operation.

Referring to FIG. 5, FIG. 5 is one of flow charts of the wireless power supply system control method provided by embodiments of the present disclosure.

As shown in FIG. 5, in the S101, after the first unit sending a pause power supply command to the power transmitting end, the control method for a wireless power supply system further comprises S201 and S103, as described below.
S201: the power transmitting end sending an acknowledgment packet to the first unit when receiving the pause power supply command, maintaining the power supply until a preset time duration and then pausing the power supply; and
S103: the first unit decoding the acknowledgment packet when receiving it.

It should be noted that the control method for a wireless power supply system provided in the embodiment can perform the functions and purposes as illustrated in the wireless power supply system embodiments described above, thereby achieving the corresponding technical effects. To briefly summarize, the aspects not explicitly mentioned in the embodiment can be referenced from the corresponding content in the embodiments described above.

In summary, in the embodiments of the present disclosure, a power-receiving end, a wireless power supply system, and a control method thereof are provided. The power-receiving end is configured to be mutually coupled with the power transmitting end in the wireless power supply system. The power-receiving end comprises a receiving circuit and a receiving controller, wherein the receiving controller comprises a first unit and a second unit. The first unit is connected to the receiving circuit. The receiving circuit is configured to supply power to the first unit when the wireless power supply system is in a power supply state, wherein the power supply state is of the transmission of electrical energy from the power transmitting end to the power-receiving end. The second unit is configured to be connected to an additional power source, and the additional power source is configured to provide power to the second unit. The solution of the present disclosure ensures that even when the wireless power supply system is in a paused power supply state, the additional power source can still support the continued operation of the second unit by separately supplying power to the first unit and the second unit. This prevents the sudden cessation of operation of the receiving controller during a power outage, which will affect the stability of the back end.

The foregoing is merely exemplary of the preferred embodiments of the present disclosure and should not be construed as limiting thereof. It will be apparent to those skilled in the art that various modifications and variations can be made to the disclosure without departing from the scope or spirit of the disclosure. Any modification, equivalent substitution, improvement, etc. made within the spirit and principles of the present disclosure shall be included in the scope of protection of the present disclosure.

For those skilled in the art, it is evident that the present disclosure is not limited to the details of the exemplary embodiments described above. Furthermore, it can be implemented in various other specific forms without departing from the spirit or essential characteristics of the disclosure. Therefore, from any perspective, the embodiments should be considered exemplary and non-limiting. The scope of the present disclosure is defined by the appended claims rather than the foregoing description. It is therefore intended that all variations falling within the meaning and scope of the equivalent elements of the claims be encompassed within the present disclosure. Any drawing labels in the claims should not be construed as limiting the claims involved.

### Industrial practicality

The solution of the present disclosure ensures that even when the wireless power supply system is in a paused power supply state, the additional power source can still support the continued operation of the second unit by separately supplying power to the first unit and the second unit. This prevents the sudden cessation of operation of the receiving controller during a power outage, which will affect the stability of the back end.

## Claims

1. A power-receiving end, wherein a power-receiving end is configured to be mutually coupled with a power transmitting end in a wireless power supply system; the power-receiving end comprises a receiving circuit and a receiving controller, wherein the receiving controller comprises a first unit and a second unit;
the first unit is connected to the receiving circuit;
the receiving circuit is configured to supply power to the first unit when the wireless power supply system is in a power supply state,
wherein the power supply state is of a transmission of electrical energy from the power transmitting end to the power-receiving end; and
the second unit is configured to be connected to an additional power source, and the additional power source is configured to provide power to the second unit.

2. The power-receiving end according to claim 1, wherein the first unit is configured to send a pause power supply command to the power transmitting end and to send operational status information and configuration information to the second unit before the power transmitting end pauses power supply;
the second unit is configured to transmit back the operational status information and the configuration information to the first unit when the power transmitting end resumes the power supply; and
the first unit is configured to operate based on the operational status information and the configuration information after receiving the operational state information and the configuration information back.

3. The power-receiving end according to claim 2, wherein the configuration information comprises a set timing duration of a pause in power supply, and the second unit comprises a timing circuit; and
the timing circuit is configured to record a duration of the pause in the power supply by the power transmitting end.

4. The power-receiving end according to claim 3, wherein the second unit is further configured to send an alarm message to a host computer when a duration of the pause in the power supply by the power transmitting end exceeds the set timing duration; and
the host computer is configured to send a reset signal to the second unit when receiving the alarm message, thus triggering the second unit to perform a reset operation.

5. The power-receiving end according to claim 2, wherein the configuration information comprises a set timing duration of a pause in power supply, and the second unit comprises a timing circuit; and
the timing circuit is configured to record a duration of the pause in the power supply by the power transmitting end.

6. The power-receiving end according to claim 5, wherein the second unit is further configured to perform a reset operation when a duration of the pause in the power supply by the power transmitting end exceeds the set timing duration.

7. The power-receiving end according to any one of claims 1 to 6, wherein the first unit is configured to send a pause power supply command to the power transmitting end;
the power transmitting end is configured to send an acknowledgment packet to the first unit when receiving the pause power supply command, and to maintain the power supply until a preset time duration and then pause the power supply; and
the first unit is configured to decode the acknowledgment packet when receiving the acknowledgment packet.

8. The power-receiving end according to any one of claims 1 to 7, wherein a communication method between the first unit and the power transmitting end is any one or more of load modulation communication, amplitude modulation communication, frequency modulation communication, and phase modulation communication.

9. The power-receiving end according to any one of claims 1 to 8, wherein the receiving circuit comprises sequentially cascaded receiving coils, a second matcher, and a rectifier; and
the receiving coils are configured to be mutually coupled with transmitting coils in the power transmitting end, and the rectifier is configured to be connected to a back-end load module.

10. The power-receiving end according to claim 9, wherein the first unit is connected to an output end of the rectifier, and the rectifier is configured to convert an alternating current output from the second matcher into a direct current and transmit the direct current backward.

11. The power-receiving end according to any one of claims 9 to 10, wherein a backend of the rectifier is provided with a regulator; the regulator is configured to be connected to the load module, and the regulator is connected to the first unit and receives control from the first unit.

12. A wireless power supply system, wherein the wireless power supply system comprises a power transmitting end and the power-receiving end according to any one of claims 1 to 11, wherein the power transmitting end and the power-receiving end are mutually coupled.

13. The wireless power supply system according to claim 12, wherein the power transmitting end comprises a transmitting controller, a first matcher, an inverter, and transmitting coils;
the inverter, the first matcher, and the transmitting coils are sequentially cascaded; the inverter is configured to be connected to an external power source, and the transmitting coils are configured to be mutually coupled with the receiving coils in the power-receiving end; and
the transmitting controller is connected to the first matcher and/or the inverter, and the transmitting controller is configured to send control commands to the first matcher and/or the inverter.

14. A control method for a wireless power supply system, applied to the wireless power supply system according to any one of claims 12 to 13, wherein the method comprises
the first unit sending a pause power supply command to the power transmitting end;
the first unit sending operational status information and configuration information to the second unit before the power transmitting end pauses power supply;
the second unit transmitting back the operational status information and the configuration information to the first unit when the power transmitting end resumes the power supply; and
the first unit operating based on the operational status information and the configuration information after receiving the operational state information and the configuration information back.

15. The control method for the wireless power supply system according to claim 14, wherein the configuration information comprises a set timing duration of a pause in power supply, and the second unit comprises a timing circuit; the timing circuit is configured to record a duration of the pause in the power supply by the power transmitting end; and the method further comprises:
the second unit sending an alarm message to a host computer when a duration of the pause in the power supply by the power transmitting end exceeds the set timing duration; and
the host computer sending a reset signal to the second unit when receiving the alarm message, thus triggering the second unit to perform a reset operation.

16. The control method for the wireless power supply system according to any one of claims 14 to 15, wherein after the first unit sending the pause power supply command to the power transmitting end, the method further comprises: the power transmitting end sending an acknowledgment packet to the first unit upon receiving the pause power supply command, maintaining the power supply until a preset time duration and then pausing the power supply; and the first unit decoding the acknowledgment packet when receiving the acknowledgment packet.
